# FASCICULE DE BREVET EUROPEEN

(11) **EP 3 137 740 B1**
(45) Date de publication et mention de la délivrance du brevet: **25.07.2018**
(21) Numéro de dépôt: 15725805.4
(22) Date de dépôt: 27.04.2015
(51) Int. Cl.: F01D 25/16, F02C 7/32, F02C 7/36, F02K 3/06

(54) **ASSEMBLAGE POUR TURBOMACHINE D'AERONEF ET SON PROCEDE DE MONTAGE**
ANORDNUNG FÜR FLUGZEUGTRIEBWERK UND VERFAHREN ZUR DEREN MONTAGE
ASSEMBLY FOR AIRCRAFT TURBINE ENGINE AND METHOD FOR MOUNTING SAME

(30) Priorité: 29.04.2014 FR 1453889
(43) Date de publication de la demande: 08.03.2017
(73) Titulaire: SAFRAN AIRCRAFT ENGINES, 75015 Paris (FR)
(72) Inventeur: LEMARCHAND, Kevin, Morgane, F-77550 Moissy Cramayel Cedex (FR)
(74) Mandataire: Brevalex
(86) Numéro de dépôt international: PCT/FR2015/051131
(87) Numéro de publication internationale: WO 2015/166178

(56) Documents cités:
- EP-A1- 1 911 938
- EP-A2- 1 980 732
- FR-A1- 2 966 193
- US-A- 2 932 443
- US-A- 4 566 269

## Description

### DOMAINE TECHNIQUE

La présente invention se rapporte au domaine des assemblages pour turbomachines d'aéronef, comprenant un boîtier de prélèvement de puissance mécanique, également dénommé boîtier « IGB » (de l'anglais « Inner Gear Box »).

L'invention s'applique de préférence aux turboréacteurs et aux turbopropulseurs. Elle s'applique tout particulièrement, mais non exclusivement, aux turboréacteurs à double flux dont la soufflante est entraînée par un réducteur.

### ETAT DE LA TECHNIQUE ANTERIEURE

Sur les turbomachines existantes, il est connu de prélever de la puissance mécanique sur l'arbre moteur haute pression, pour entraîner un boîtier d'engrenages. Ce dernier, également dénommé « AGB » (de l'anglais « Accessory Gear Box »), est par exemple logé dans un compartiment inter-veine de la turbomachine, c'est-à-dire dans un compartiment situé radialement entre le canal primaire et le canal secondaire de la turbomachine. Une telle configuration est par exemple connue du document FR 2 946 091. Une autre configuration selon l'art antérieur est connue du document US 2,932,443. Un tel boîtier d'engrenages est classiquement formé à l'aide d'arbres portant des pignons droits pour s'entraîner les uns les autres en rotation, et pour entraîner les équipements auxquels ils sont associés. A titre d'exemple indicatif, les équipements peuvent être du type pompe à carburant, pompe hydraulique, pompe de lubrification, alternateur, démarreur, ou encore générateur électrique de puissance.

Pour le prélèvement de la puissance mécanique sur l'arbre moteur haute pression, il est prévu un boîtier de prélèvement, dit « IGB » ou encore « boîtier d'entraînement interne ». Ce boîtier comporte une roue dentée engrenant avec une autre roue dentée, solidaire en rotation de l'arbre moteur haute ou basse pression. Le boîtier IGB entraîne à son tour en rotation un arbre de prélèvement de puissance mécanique, destiné quant à lui à entraîner le boîtier d'engrenages, habituellement via un boîtier de renvoi d'angle, également dit boîtier « TGB » (de l'anglais « Transfer Gear Box »).

Quelle que soit la configuration envisagée, l'accessibilité du boîtier IGB s'avère souvent compliquée, et rend les opérations de maintenance délicates. En effet, pour avoir accès au boîtier IGB, il s'avère habituellement nécessaire de démonter la roue de soufflante, l'éventuel réducteur, un ou plusieurs supports de palier de roulement, et éventuellement le compresseur. Cela complique bien entendu les opérations de maintenance.

Il existe donc un besoin d'optimisation de la conception de tels assemblages de turbomachine, en particulier pour faciliter l'accès au boîtier IGB lors des opérations de maintenance.

### EXPOSÉ DE L'INVENTION

L'invention a donc pour but de proposer une solution remédiant au moins partiellement aux problèmes mentionnés ci-dessus, rencontrés dans les solutions de l'art antérieur.

Pour ce faire, l'invention a pour objet un assemblage pour turbomachine d'aéronef selon les caractéristiques de la revendication 1.

L'invention est avantageuse en ce qu'elle permet un montage et un démontage aisés du boîtier de prélèvement de puissance mécanique, particulièrement intéressants dans le cadre des opérations de maintenance. Effectivement, une fois l'arbre de prélèvement extrait du boîtier de prélèvement par déplacement à travers la première ouverture du support de palier, ce boîtier peut être extrait de l'espace radialement intérieur par la seconde ouverture du support de palier, prévue à cet effet. Le support de palier ne nécessite donc pas d'être démonté pour autoriser l'accès au boîtier de prélèvement de puissance mécanique, ce qui facilite le démontage de ce dernier. Bien entendu, lorsque le boîtier doit être remonté dans l'espace radialement intérieur, des opérations inverses sont mises en oeuvre.

L'invention présente par ailleurs au moins l'une des caractéristiques optionnelles suivantes, prises isolément ou en combinaison.

Ledit support de palier comprend deux portions inclinées l'une par rapport à l'autre, respectivement une première portion traversée par la seconde ouverture, ainsi qu'une seconde portion traversée par la première ouverture.

Les première et seconde portions forment un V en demi-section, définissant de préférence un angle d'inclinaison d'environ 90° entre les deux portions, même si d'autres angles pourraient être envisagés, sans sortir du cadre de l'invention.

Ledit support de palier est réalisé à partir de plusieurs pièces montées les unes sur les autres. Alternativement, il peut s'agir d'une pièce d'un seul tenant. D'ailleurs, il est noté que les première et seconde portions précitées sont préférentiellement prévues au sein d'une pièce d'un seul tenant.

L'arbre de prélèvement est monté glissant dans un orifice de la seconde roue dentée. De préférence, cet arbre est uniquement en appui axial vers le fond du boîtier de prélèvement, pour faciliter son extraction lors des opérations de maintenance.

Ledit espace radialement intérieur correspond à tout ou partie d'une enceinte de lubrification dans lequel est logé ledit au moins un palier de roulement.

Lesdits moyens de montage comprennent des moyens formant un couvercle obturant ladite seconde ouverture, ainsi que des moyens de liaison entre le couvercle et le corps du boîtier de prélèvement de puissance, les moyens de liaison traversant de préférence ladite seconde ouverture.

L'ensemble rotatif comprend un moyeu de soufflante, destiné à être entraîné directement par un arbre basse pression de la turbomachine, ou par un réducteur lui-même entraîné par cet arbre basse pression ou par un arbre haute pression. Alternativement, le prélèvement de puissance peut être effectué sur tout élément de la turbomachine, appartenant au corps haute pression, au corps basse pression, ou à un corps de pression intermédiaire. Il s'agit de préférence de tout élément du corps basse pression ou du corps de pression intermédiaire, lorsqu'un tel corps est présent sur la turbomachine. A titre d'exemple indicatif, le prélèvement de puissance peut s'effectuer sur l'arbre basse pression de la turbomachine.

L'invention a également pour objet une turbomachine d'aéronef comprenant un assemblage tel que décrit ci-dessus, de préférence un turboréacteur à double flux dont la soufflante est entraînée par un réducteur.

Enfin, l'invention a pour objet un procédé de montage d'un tel assemblage, comprenant les étapes successives suivantes :
- introduction du boîtier de prélèvement de puissance dans l'espace radialement intérieur, depuis l'espace radialement extérieur, via ladite seconde ouverture pratiquée dans le support de palier ; et
- introduction de l'arbre de prélèvement de puissance dans le boîtier de prélèvement de puissance, depuis l'espace radialement extérieur, en le faisant traverser ladite première ouverture pratiquée dans le support de palier.

Bien entendu, il est noté que des opérations inverses peuvent être effectuées pour assurer le démontage du boîtier de prélèvement de puissance, lors d'opérations de maintenance.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté, d'un turboréacteur selon l'invention ;
- la figure 2 représente une vue agrandie, plus détaillée, d'une partie avant du turboréacteur montré sur la figure précédente ;
- les figures 3 à 5 sont des vues détaillées d'une partie avant du turboréacteur montré sur les figures précédentes, montrant un assemblage selon un mode de réalisation préféré de la présente invention ;
- les figures 6a à 6f représentent des vues schématisant différentes étapes d'un procédé de montage de l'assemblage montré sur les figures 3 à 5 ; et
- la figure 7 représente une vue similaire à celle de la figure 2, montrant schématiquement différents emplacements possibles pour l'invention.

### EXPOSÉ DÉTAILLÉ DE MODES DE RÉALISATION PRÉFÉRÉS

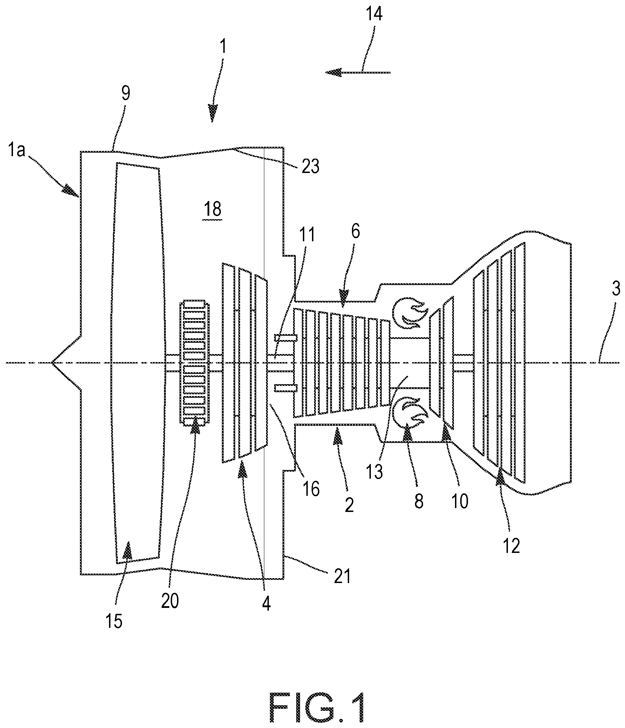

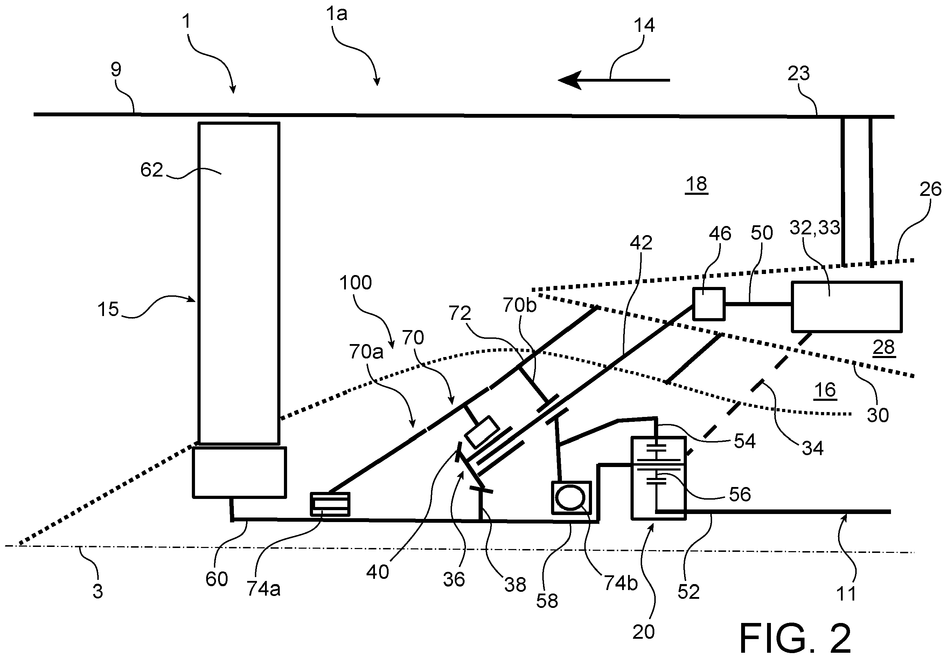

En référence tout d'abord aux figures 1 et 2, il est représenté un turboréacteur 1 à double flux et à double corps, présentant un taux de dilution élevé. Le turboréacteur 1, qui présente une partie avant référencée la sur la figure 2, comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11.

Le turboréacteur 1 comporte par ailleurs, à l'avant du générateur de gaz 2 et du compresseur basse pression 4, une soufflante 15. Cette soufflante est rotative selon l'axe 3, et entourée d'un carter de soufflante 9. Elle n'est pas entraînée directement par l'arbre basse pression 11, mais seulement entraînée indirectement par cet arbre, même s'il pourrait en être autrement, sans sortir du cadre de l'invention. En effet, un réducteur 20 est agencé entre le corps basse pression et la soufflante 15, en étant disposé axialement entre cette dernière et le compresseur basse pression 4. La présence du réducteur 20 pour entraîner la soufflante 15 permet de prévoir un plus grand diamètre de soufflante, et favorise donc l'obtention d'un plus fort taux de dilution, assurant un gain de consommation en carburant.

En outre, le turboréacteur 1 définit un premier canal 16 destiné à être traversé par un flux primaire, ainsi qu'un canal secondaire 18 destiné à être traversé par un flux secondaire situé radialement vers l'extérieur par rapport au flux primaire. Comme cela est connu de l'homme du métier, ce canal secondaire 18 est délimité radialement vers l'extérieur par une virole extérieure 23 d'un carter intermédiaire 21. Celui-ci comprend également un moyeu raccordé à la virole extérieure 23 par l'intermédiaire de bras radiaux. La virole extérieure 23, préférentiellement métallique, prolonge vers l'arrière le carter de soufflante 9.

De plus, le canal secondaire 18 est délimité radialement vers l'intérieur par une surface de délimitation interne 26 servant également de délimitation externe à un compartiment inter-veine 28, visible sur la figure 2. Ce compartiment inter-veine 28 est également délimité vers l'avant par le moyeu du carter intermédiaire, et radialement vers l'intérieur par une virole 30 renfermant le compresseur basse pression 4 mentionné ci-dessus.

Dans le turboréacteur 1, il est prévu un boîtier d'engrenages 32 ou un équipement de turboréacteur nécessitant une puissance mécanique, ce boîtier étant par la suite appelé boîtier AGB 32. Il est placé dans le compartiment inter-veine 28, par exemple fixé sur une face aval du moyeu du carter intermédiaire. Néanmoins, cette implantation peut être différente, c'est la raison pour laquelle sur la figure 2, ce boîtier AGB 32 a simplement été schématisé au sein du compartiment inter-veine 28, sans rattachement spécifique.

De manière classique et comme cela a été indiqué précédemment, le boîtier AGB 32 est formé à l'aide d'arbres portant des pignons droits pour s'entraîner les uns les autres en rotation, et pour entraîner les équipements auxquels ils sont associés, de préférence logés dans le compartiment inter-veine 28. Ici, seul un équipement a été représenté, schématiquement. Il s'agit d'un équipement 33 permettant d'alimenter le réducteur 20 en lubrifiant, via une conduite de lubrification 34. Néanmoins, d'autres équipements sont prévus, comme par exemple du type pompe à carburant, pompe hydraulique, alternateur, démarreur, ou encore générateur électrique de puissance.

Pour le prélèvement de la puissance mécanique destinée à alimenter le boîtier AGB 32, il est prévu un boîtier de prélèvement 36, ci-après dénommé boîtier IGB. Une première roue dentée 38 centrée sur l'axe 3 et entraînée par la soufflante 15 engrène avec une seconde roue dentée 40 du boîtier IGB 36. La première roue 38 correspond alors à une roue de prélèvement de puissance, dite roue menante.

La seconde roue dentée 40, dite roue menée, loge un arbre de prélèvement de puissance mécanique 42 qu'elle entraîne en rotation selon l'axe de cet arbre, ce dernier étant de préférence incliné selon la direction de l'axe 3. L'arbre de prélèvement 42 coopère à son extrémité opposée avec un boîtier de renvoi d'angle 46, ci-après dénommé boîtier TGB et placé dans le compartiment inter-veine 28. Enfin, pour compléter la chaîne cinématique entre le boîtier TGB 46 et le boîtier AGB 32, il est prévu un arbre rotatif de transmission 50.

Le réducteur 20 comprend un train épicycloïdal. Il est noté que conventionnellement, le train est dit épicycloïdal lorsque la couronne est fixe en rotation, tandis qu'il est dit planétaire lorsque le porte-satellites est fixe en rotation. Ici, il comporte tout d'abord un planétaire 52 centré sur l'axe 3 et solidaire en rotation de l'arbre basse pression 11, en étant agencé dans le prolongement avant de cet arbre 11. Les deux éléments 11, 52 peuvent être réalisés d'une seule pièce, ou bien préférentiellement rapportés fixement l'un sur l'autre. Le train épicycloïdal comporte par ailleurs une couronne extérieure 54, solidaire d'un stator du turboréacteur. Il est également prévu des satellites 56, engrenant avec la couronne extérieure 54 et le planétaire 52. Enfin, le train épicycloïdal comporte un arbre porte-satellites 58 solidaire en rotation avec un moyeu de soufflante 60, également dénommé rotor de soufflante, ce dernier portant les aubes de soufflante 62 par l'intermédiaire d'un disque de soufflante. Ici aussi, les deux éléments 58, 60 peuvent être réalisés d'une seule pièce, ou bien préférentiellement rapportés fixement l'un sur l'autre. Dans une autre configuration possible non représentée, dite à train planétaire, le porte-satellites 58 est solidaire du stator du turboréacteur, et la couronne extérieure 54 est solidaire en rotation avec le moyeu de soufflante 60.

La première roue dentée précitée 38, entraînant le boîtier IGB 36, est solidaire en rotation du moyeu de soufflante 60, en étant fixée sur le porte-satellites 58 ou sur ce moyeu de soufflante 60, comme cela a été schématisé sur la figure 2. Aussi, puisque le réducteur 20 est entraîné par l'arbre basse pression 11, ce réducteur ainsi que la soufflante 15 peuvent être considérés comme faisant partie du corps basse pression du turboréacteur. L'avantage réside ici dans le fait que lors d'une phase d'autorotation de la soufflante, dans laquelle toute ou partie de la puissance générant la rotation du corps basse pression provient d'une autre source que du corps haute pression, par exemple de la force aérodynamique s'appliquant sur les aubes de la soufflante, il est toujours possible de prélever une puissance mécanique minimale sur celle-ci. Ceci est particulièrement avantageux pour répondre à un besoin vital en lubrification du réducteur 20 durant l'autorotation de la soufflante. D'autant que pour diminuer la masse et l'encombrement du réducteur 20, ce dernier est conçu avec des paliers lisses (non représentés sur la figure 2) supportant ses éléments rotatifs. Aussi, dans cette conception avantageuse, les corps roulants classiques des paliers de roulement sont remplacés par un film d'huile, qui possède soit une certaine vitesse pour les paliers du type hydrodynamique, soit une certaine pression pour les paliers du type hydrostatique. Par conséquent, lors d'une éventuelle autorotation de la soufflante, la conception de l'invention permet la lubrification vitale de ces paliers lisses, grâce au prélèvement effectué sur la première roue dentée 38 qui reste entraînée par la soufflante 15 en rotation. En effet, la rotation de la soufflante 15 entraîne en chaîne la rotation de la première roue dentée 38, la rotation de la seconde roue dentée 40, la rotation des arbres 42, 50, l'entrainement du boîtier AGB 32, et enfin l'actionnement de l'équipement 33 provoquant la lubrification du réducteur 20, via la conduite 34. Cette lubrification évite la dégradation des films d'huile des paliers lisses de ce réducteur, et assure ainsi le bon fonctionnement de ce dernier tout en prolongeant sa durée de vie.

Il est noté qu'en cas d'autorotation de la soufflante, la lubrification du réducteur 20 est effectivement assurée de la manière exposée ci-dessus, mais d'autres moyens conventionnels pourraient être prévus en sus pour assurer la lubrification de ce réducteur en dehors d'une éventuelle phase d'autorotation.

En référence à présent aux figures 2 à 5, il est montré un assemblage 100 faisant partie intégrante du turboréacteur 1. L'assemblage 100 comporte tout d'abord un support de palier de roulement 70, raccordé au carter de délimitation intérieur du premier canal 16 par le biais d'un flasque structural 72, montré uniquement schématiquement sur la figure 2. Le support de palier 70 fait donc partie du stator du turboréacteur 1. Il est situé à l'avant du réducteur 20, et supporte à ses deux extrémités axiales opposées respectivement deux paliers de roulement 74a, 74b. Les deux paliers guident un ensemble rotatif selon l'axe 3 et destiné à être entraîné par le générateur de gaz 2, cet ensemble comprenant le porte-satellites 58 du réducteur, le moyeu 60 de la soufflante, et la première roue dentée 38. La première roue dentée 38 est agencée axialement entre les deux paliers de roulement 74a, 74b.

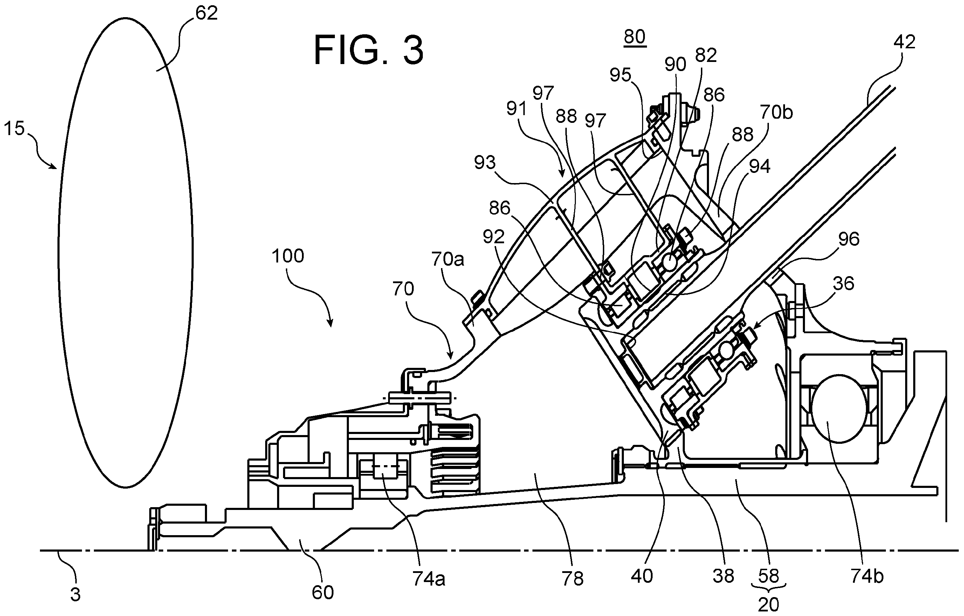

Le support de palier 70 est centré sur l'axe 3. Il délimite un espace radialement intérieur 78 dans lequel sont placés les paliers 74a, 74b, et forme en partie une enceinte de lubrification. Le support est réalisé à l'aide d'une pièce d'un seul tenant, ou de plusieurs pièces fixées les unes aux autres comme cela a été représenté sur les figures 3 à 5. Il s'agit en effet de deux pièces rapportées l'une sur l'autre par des boulons axiaux, la pièce la plus arrière, de plus petite dimension, portant le palier de roulement 74b supportant le porte-satellites 58.

Ensemble, les deux pièces du support de palier 70 forment une première et une seconde portions 70a, 70b, inclinées l'une par rapport à l'autre. Ces deux portions forment un V en demi-section axiale, le V étant ouvert radialement vers l'intérieur et définissant un angle d'inclinaison compris entre 30 et 120° entre les deux portions, et de préférence d'environ 90°.

Le boîtier IGB 36 précité est également placé dans l'espace radialement intérieur 78, opposé à un espace radialement extérieur 80. A cet égard, il est indiqué que du côté de la portion avant 70a du support de palier 70, cet espace extérieur 80 est situé en dehors de l'enceinte de lubrification, tandis que du côté de la portion arrière 70b du support de palier 70, cet espace extérieur 80 fait partie de l'enceinte de lubrification intégrant également l'espace intérieur 78, ce dernier logeant la première roue 38 et la seconde roue 40.

Comme indiqué précédemment, le boîtier IGB 36 comporte la seconde roue dentée 40, entraînée en rotation par la première roue dentée 38 solidaire du porte-satellites 58. Les axes de ces roues étant inclinés l'un par rapport à l'autre, des engrenages coniques sont mis en oeuvre. La seconde roue 40 est portée par un corps fixe 82, dans lequel est logée cette même roue 40.

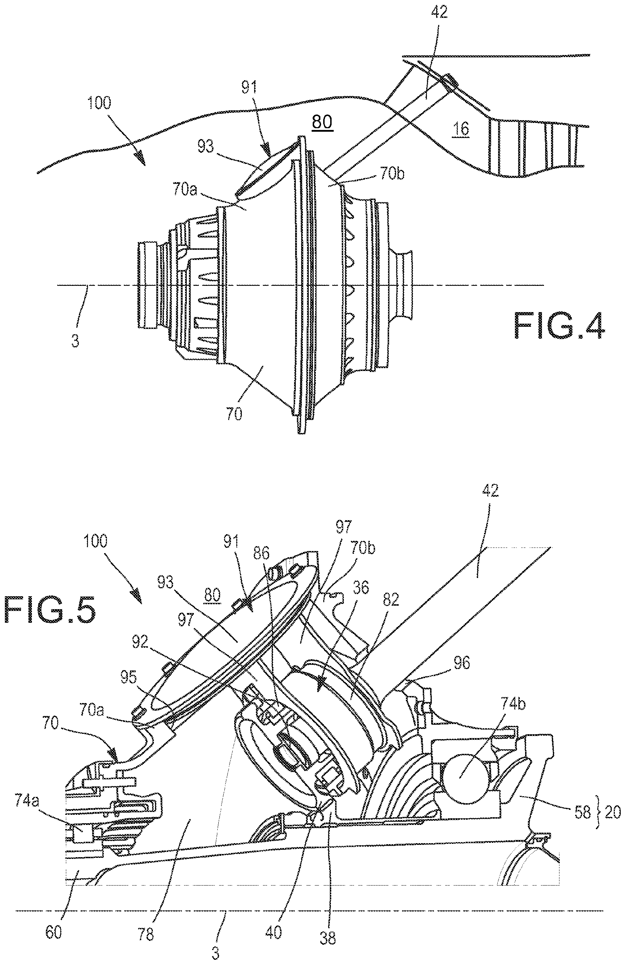

Le boîtier IGB 36 va à présent être décrit plus spécifiquement en référence aux figures 3 et 5. Son corps 82 se présente sous la forme d'une chemise recevant la seconde roue dentée 40, avec des roulements 86 interposés entre ces éléments. Les roulements 86 et la roue 40 sont maintenus au corps 82 par des éléments vissés 88, agencés aux extrémités axiales du boîtier IGB 36. Plus précisément, ces éléments vissés permettent de solidariser les bagues extérieures des roulements 88 au corps 82. De plus, une entretoise 90 est prévue entre les bagues intérieures des deux roulements 88.

La seconde roue dentée 40 définit intérieurement un logement dans lequel se loge l'extrémité avant de l'arbre 42. Le montage est glissant, de préférence pour que cet arbre soit uniquement en appui axial dans le fond du boîtier, c'est-à-dire en appui axial contre un fond 92 défini par la roue 40. Aussi, cela facilite les opérations d'introduction et d'extraction de l'arbre 42, lors des opérations de maintenance. Pour l'entrainement en rotation de l'arbre 42, ce dernier présente une surface extérieure structurée coopérant avec la surface intérieure de la roue 40. Une liaison 94 du type cannelée peut ainsi être mise en oeuvre pour réaliser cet entrainement en rotation.

Depuis son extrémité avant logée dans le boîtier IGB 36, l'arbre de prélèvement 42 s'étend vers l'arrière, et radialement vers l'extérieur jusqu'au boîtier TGB 46. Pour ce faire, il traverse une première ouverture 96 pratiquée sur le support de palier 70, et plus précisément pratiquée à travers la seconde portion 70b de ce support. Il traverse ensuite le premier canal 16 avant de se connecter au boîtier TGB 46. A cet égard, il est indiqué que l'ouverture 96 débouche de part et d'autre dans l'espace radialement intérieur 78 et dans l'espace radialement extérieur 80.

Enfin, l'assemblage 100 comporte des moyens 91 de montage du corps 82 du boîtier IGB 36, sur la première portion 70a du support de palier 70. Ces moyens de montage 91 comprennent tout d'abord des moyens formant un couvercle 93, obturant une seconde ouverture 95 pratiquée à travers la première portion 70a. A cet égard, il est indiqué que la seconde ouverture 95 est distincte de la première ouverture 96 et débouche de part et d'autre dans l'espace radialement intérieur 78 et dans l'espace radialement extérieur 80. Par exemple, l'ouverture 95 est prévue sur la portion 70a du V, tandis que l'ouverture 96 est prévue sur l'autre portion 70b du V.

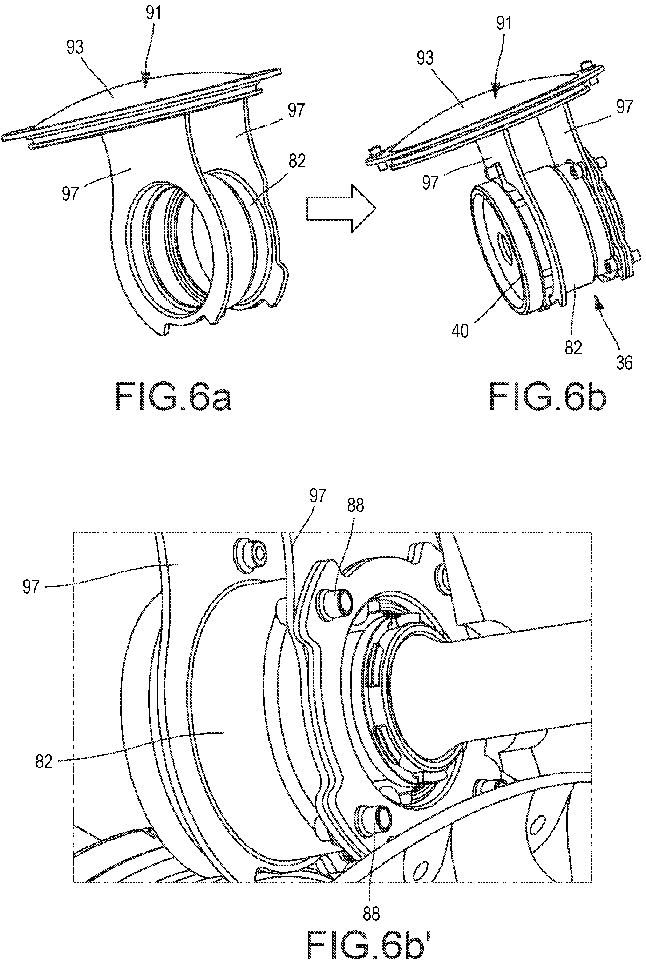

Une liaison étanche est prévue entre le support 70 et le couvercle 93 vissé sur ce support, pour fermer l'enceinte de lubrification 78 de manière satisfaisante et éviter une fuite d'huile et une dépression de l'enceinte de lubrification. Les moyens de montage 91 comportent également des moyens de liaison 97 entre le couvercle 93 et le corps 82 du boîtier IGB 36. Ces moyens de liaison 97 sont formés ici par deux plaques, par exemple réalisées d'une seule pièce avec le couvercle et/ou avec le corps 82. Ces deux plaques sont ainsi reliées à la surface intérieure du couvercle 93, et traversent la seconde ouverture 95 du support. Cette seconde ouverture 95 est d'ailleurs configurée pour permettre l'introduction du boîtier de prélèvement dans l'espace radialement intérieur, comme cela va à présent être décrit en référence aux figures 6a à 6f.

Sur ces figures, il est en effet montré différentes étapes successives d'un procédé de montage de l'assemblage 100.

Tout d'abord en référence aux figures 6a à 6b', le boîtier IGB 36 est assemblé en dehors du turboréacteur, en étant monté sur ses moyens de montage 91. Pour ce faire, la seconde roue dentée 40 est mise en place dans le corps 82, avec ses roulements associés. Les éléments vissés 88 assurent l'assemblage des divers éléments du boîtier IGB 36 et permettent d'obtenir un ensemble aisément manipulable par un opérateur, que ce soit lors de la fabrication du turboréacteur, ou lors d'une opération de maintenance.

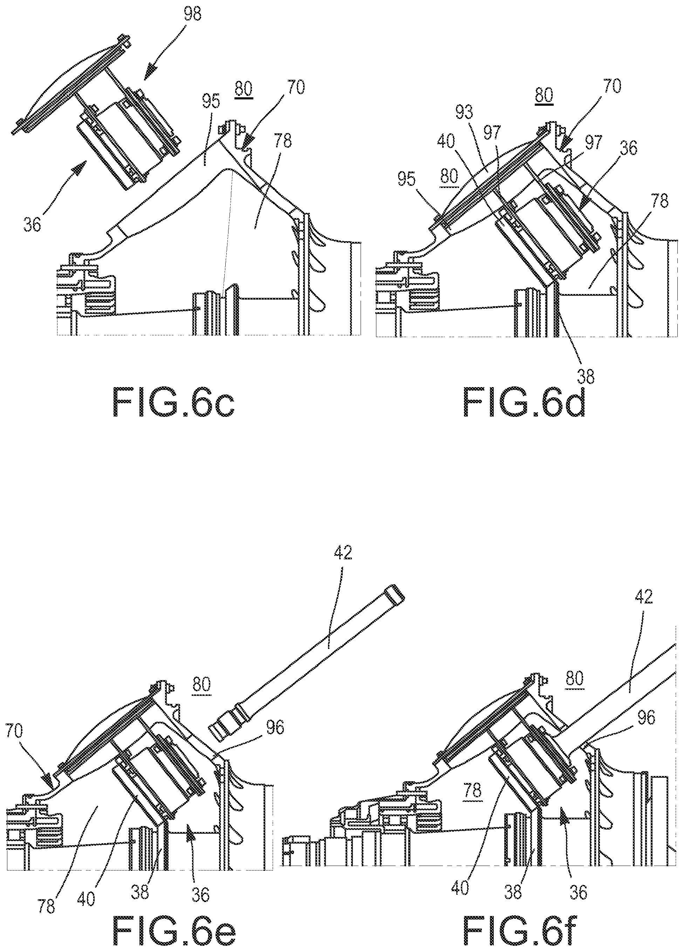

Cet ensemble, référencé 98 sur la figure 6c, est ensuite déplacé de manière à ce que le boîtier IGB 36 soit introduit dans l'espace radialement intérieur 78 en passant à travers la seconde ouverture 95 du support 70, dimensionnée en conséquence. Cette introduction est poursuivie jusqu'à ce que le couvercle 93 obture cette ouverture, comme cela a été représenté sur la figure 6d. Il est ensuite procédé à la fixation étanche du couvercle 93 sur le support 70, depuis l'espace radialement extérieur 80, par vissage. Dans cette position, les plaques de liaison 97 traversent l'ouverture 95 et amènent la seconde roue dentée 40 du boîtier IGB 36 à engrener avec la première roue dentée 38.

Ensuite, l'arbre de prélèvement 42 est introduit dans le boîtier IGB 36, également depuis l'espace radialement extérieur 80, comme cela a été schématisé sur la figure 6e. Pour ce faire, l'arbre 42 traverse la première ouverture 96 pratiquée à travers la seconde portion du support 70. L'arbre 42 est ainsi simplement glissé dans la seconde roue 40, jusqu'au contact avec le fond pour atteindre la position représentée sur la figure 6f.

Aussi, il doit être compris que la conception retenue permet un montage et un démontage aisés du boîtier IGB 36, particulièrement intéressants dans le cadre des opérations de maintenance. En effet, pour le démontage, une fois l'arbre 42 extrait du boîtier par déplacement à travers la première ouverture 96 du support de palier 70, ce boîtier peut être extrait de l'espace radialement intérieur 78 par la seconde ouverture 95 dimensionnée en conséquence. Le support de palier 70 ne nécessite donc pas d'être démonté pour autoriser l'accès au boîtier IGB 36, ce qui facilite le démontage de ce dernier. D'ailleurs, il est noté que lorsque l'ouverture 95 est agencée sur la partie supérieure du moteur, cela permet d'ouvrir l'enceinte de lubrification sans provoquer de fuite d'huile, évitant ainsi une vidange de l'enceinte et facilitant l'opération pour les mécaniciens.

Bien entendu, lorsque le boîtier doit être remonté dans l'espace radialement intérieur, des opérations inverses sont mises en oeuvre.

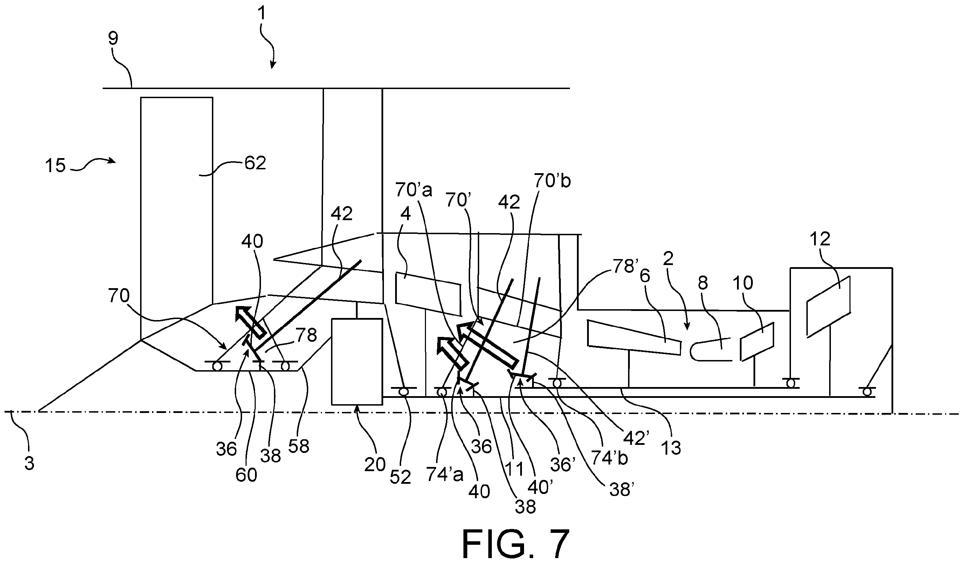

En référence à présent à la figure 7, il est représenté différents emplacements possibles pour l'invention. Il est noté que les trois emplacements distincts représentés sur cette figure 7 peuvent être retenus simultanément, ou bien seulement l'un ou deux d'entre eux.

Le premier emplacement correspond à celui montré sur les figures précédentes, à savoir entre les deux paliers de roulement 74a, 74b guidant le moyeu 60 de la soufflante 15.

Selon une autre possibilité, la première roue dentée 38 est solidaire en rotation du planétaire 52, en étant fixée sur ce dernier ou sur l'arbre basse pression 11. De préférence, la première roue 38 du boîtier IGB 36 est fixée à l'arbre basse pression 11 et agencée axialement entre le compresseur basse pression 4 et le compresseur haute pression 6. Ici, il est prévu un support de palier 70' portant à son extrémité amont un palier de roulement 74'a supportant l'arbre basse pression 11, et portant à son extrémité aval un palier de roulement 74'b supportant l'arbre haute pression 13. Le support 70' est également en forme de V, avec une portion amont 70'a et une portion aval 70'b. Le boîtier IGB 36 est destiné à être introduit dans l'espace radialement intérieur 78', formant enceinte de lubrification, par une ouverture (non représentée) de la portion amont 70'a. Egalement, l'arbre de prélèvement 42 traverse une ouverture (non représentée) présente sur la portion amont 70'b. Les opérations de montage et de démontage du boîtier IGB 36 sont similaires à celles décrites en référence aux figures précédentes pour la première implantation.

La troisième implantation possible de l'invention se trouve également dans l'espace radialement intérieur 78', délimité par le support de palier 70'. En effet, il est prévu un autre boîtier IGB 36', dont la seconde roue 40' est entraînée par une première roue 38' agencée de manière plus conventionnelle, à savoir solidaire en rotation du corps haute pression. Plus précisément, la première roue 38' est fixée sur l'arbre haute pression 13, et engrène avec la seconde roue 40' entraînant un autre arbre de prélèvement de puissance 42' relié au boîtier AGB via un arbre de prélèvement 42', éventuellement via un autre boîtier TGB (non représenté). Ici aussi, Le boîtier IGB 36' est destiné à être introduit dans l'espace radialement intérieur 78' par une autre ouverture (non représentée) de la portion amont 70'a, tandis que l'arbre de prélèvement 42' traverse une autre ouverture (non représentée) présente sur la portion aval 70'b. Les opérations de montage et de démontage du boîtier IGB 36' sont aussi similaires à celles décrites en référence aux figures précédentes. A cet égard, il est noté que sur la figure 7, les flèches schématisent la direction d'extraction des boîtiers IGB en cas d'opérations de maintenance, et ce pour les trois implantations envisagées.

Dans le cas où plusieurs des implantations possibles sont retenues, il peut être prévu des moyens de commande configurés pour assurer des prélèvements simultanés et/ou alternatifs via les boîtiers IGB 36, 36, 36', en fonction de paramètres prédéterminés.

Bien entendu, diverses modifications peuvent être apportées par l'homme du métier à l'invention qui vient d'être décrite, uniquement à titre d'exemples non limitatifs.

## Revendications

1. Assemblage (100) pour turbomachine (1) d'aéronef comprenant :
- un support de palier de roulement (70) délimitant, de part et d'autre de celui-ci, un espace radialement intérieur (78) et un espace radialement extérieur (80) ;
- au moins un palier de roulement (74a, 74b) logé dans ledit espace radialement intérieur (78) et porté par ledit support de palier (70) ;
- un ensemble rotatif (58, 60, 38), destiné à être entraîné en rotation par un générateur de gaz (2) de la turbomachine, ledit ensemble étant rotatif selon un axe longitudinal (3) de la turbomachine et comprenant une première roue dentée (38) et étant porté par ledit au moins un palier de roulement (74a, 74b), ladite première roue dentée étant agencée dans ledit espace radialement intérieur (78) ;
- un boîtier de prélèvement de puissance mécanique (36) logé dans l'espace radialement intérieur (78) et comprenant une seconde roue dentée (40) engrenant avec la première roue dentée (38), le boîtier de prélèvement de puissance mécanique (36) comprenant un corps (82) logeant à rotation ladite seconde roue dentée (40) agencée dans ledit espace radialement intérieur (78) ;
- un arbre de prélèvement de puissance mécanique (42), inséré dans le boîtier de prélèvement de puissance mécanique (36) et entraîné en rotation par ladite seconde roue dentée (40), l'arbre de prélèvement (42) traversant une première ouverture (96) du support de palier (70) et étant destiné à entraîner un boîtier d'accessoires (32) ou un ou plusieurs équipements de la turbomachine, ladite première ouverture (96) débouchant de part et d'autre dans ledit espace radialement intérieur (78) et dans ledit espace radialement extérieur (80),
**caractérisé en ce qu'**il comporte en outre des moyens (91) de montage du boîtier de prélèvement de puissance mécanique (36) sur le support de palier (70), lesdits moyens de montage traversant une seconde ouverture (95) à travers le support de palier (70), ladite seconde ouverture (95), distincte de la première ouverture (96), débouchant de part et d'autre dans ledit espace radialement intérieur (78) et dans ledit espace radialement extérieur (80), et étant configurée pour permettre l'introduction du boîtier de prélèvement (36) dans ledit espace radialement intérieur (78).

2. Assemblage selon la revendication 1, **caractérisé en ce que** ledit support de palier (70) comprend deux portions (70a, 70b) inclinées l'une par rapport à l'autre, respectivement une première portion (70a) traversée par la seconde ouverture (95), ainsi qu'une seconde portion (70b) traversée par la première ouverture (96).

3. Assemblage selon la revendication 2, **caractérisé en ce que** les première et seconde portions (70a, 70b) forment un V en demi-section, définissant de préférence un angle d'inclinaison d'environ 90° entre les deux portions.

4. Assemblage selon l'une quelconque des revendications précédentes, **caractérisé en ce que** ledit support de palier (70) est réalisé à partir de plusieurs pièces montées les unes sur les autres.

5. Assemblage selon l'une quelconque des revendications précédentes, **caractérisé en ce que** l'arbre de prélèvement (42) est monté glissant dans un orifice de la seconde roue dentée (40).

6. Assemblage selon l'une quelconque des revendications précédentes, **caractérisé en ce que** ledit espace radialement intérieur (78) correspond à tout ou partie d'une enceinte de lubrification dans lequel est logé ledit au moins un palier de roulement (74a, 74b).

7. Assemblage selon l'une quelconque des revendications précédentes, **caractérisé en ce que** lesdits moyens de montage (91) comprennent des moyens formant un couvercle (93) obturant ladite seconde ouverture (95), ainsi que des moyens de liaison (97) entre le couvercle (93) et le corps (82) du boîtier de prélèvement de puissance (36), les moyens de liaison (97) traversant de préférence ladite seconde ouverture (95).

8. Assemblage selon l'une quelconque des revendications précédentes, **caractérisé en ce que** l'ensemble rotatif comprend un moyeu de soufflante (60), destiné à être entraîné directement par un arbre basse pression (11) de la turbomachine, ou par un réducteur (20) lui-même entraîné par cet arbre basse pression ou par un arbre haute pression.

9. Turbomachine (1) d'aéronef comprenant un assemblage (100) selon l'une quelconque des revendications précédentes.

10. Procédé de montage d'un assemblage (100) selon l'une quelconque des revendications 1 à 8, **caractérisé en ce qu'**il comprend les étapes successives suivantes :
- introduction du boîtier de prélèvement de puissance (36) dans l'espace radialement intérieur (78), depuis l'espace radialement extérieur (80), via ladite seconde ouverture (95) pratiquée dans le support de palier (70) ; et
- introduction de l'arbre de prélèvement de puissance (42) dans le boîtier de prélèvement de puissance (36), depuis l'espace radialement extérieur (80), en le faisant traverser ladite première ouverture (96) pratiquée dans le support de palier (70).

## Patentansprüche

1. Anordnung (100) für Flugzeug-Turbotriebwerke (1), aufweisend:
- eine Wälzlager-Stütze (70), die nach ihren beiden Seiten einen radial inneren Raum (78) bzw. einen radial äußeren Raum (80) abgrenzt;
- mindestens ein Wälzlager (74a, 74b), das in dem genannten radial inneren Raum (78) Aufnahme findet und von der genannten Lagerstütze (70) gehalten wird;
- eine drehende Einheit (58, 60, 38), die dazu bestimmt ist, durch einen Gaserzeuger (2) des Turbotriebwerks in Drehbewegung getrieben zu werden, wobei diese Einheit um eine Längsachse (3) des Turbotriebwerks drehbar ist und ein erstes Zahnrad (38) umfasst und von dem genannten mindestens einen Wälzlager (74a, 74b) gehalten wird, wobei dieses erste Zahnrad in dem genannten radial inneren Raum (78) angeordnet ist;
- ein Gehäuse zur Entnahme mechanischer Leistung (36), das in dem genannten radial inneren Raum (78) Aufnahme findet und ein zweites Zahnrad (40) enthält, das mit dem ersten Zahnrad (38) in Eingriff kommt, wobei das Gehäuse zur Entnahme mechanischer Leistung (36) einen Körper (82) umfasst, der dieses zweite Zahnrad (40), das in dem genannten radial inneren Raum (78) angeordnet ist, drehbar aufnimmt;
- eine Welle zur Entnahme mechanischer Leistung (42), die in das Gehäuse zur Entnahme mechanischer Leistung (36) eingesetzt ist und durch das genannte zweite Zahnrad (40) in Drehbewegung getrieben wird, wobei die Entnahmewelle (42) sich durch eine erste Öffnung (96) der Lagerstütze (70) hindurch erstreckt und dazu bestimmt ist, ein Gehäuse mit Zubehör (32) oder eine oder mehrere Einrichtungen des Turbotriebwerks anzutreiben, wobei diese erste Öffnung (96) nach ihren beiden Seiten hin in den radial inneren Raum (78) bzw. den radial äußeren Raum (80) mündet,
**dadurch gekennzeichnet,**
**dass** sie ferner Mittel (91) zum Einbau des Gehäuses zur Entnahme mechanischer Leistung (36) an der Lagerstütze (70) aufweist, wobei diese Einbaumittel durch eine zweite Öffnung (95) durch die Lagerstütze (70) gelangen, wobei diese zweite Öffnung (95), die eine von der ersten Öffnung (96) verschiedene ist, nach ihren beiden Seiten hin in den radial inneren Raum (78) bzw. den radial äußeren Raum (80) mündet, und so geformt ist, dass sie das Einführen des Entnahmegehäuses (36) in den genannten radial inneren Raum (78) ermöglicht.

2. Anordnung nach Anspruch 1,
**dadurch gekennzeichnet,**
**dass** die Lagerstütze (70) zwei Abschnitte (70a, 70b) umfasst, die zueinander geneigt angeordnet sind, bzw. einen ersten Abschnitt (70a), durch den die zweite Öffnung (95) verläuft, sowie einen zweiten Abschnitt (70b), durch den die erste Öffnung (96) verläuft.

3. Anordnung nach Anspruch 2,
**dadurch gekennzeichnet,**
**dass** der erste und der zweite Abschnitt (70a, 70b) im halben Schnitt ein V bilden, das vorzugsweise einen Neigungswinkel von ca. 90° zwischen den beiden Abschnitten aufweist.

4. Anordnung nach einem der vorherigen Ansprüche,
**dadurch gekennzeichnet,**
**dass** die Lagerstütze (70) aus mehreren Teilen hergestellt wird, die aneinander befestigt werden.

5. Anordnung nach einem der vorherigen Ansprüche,
**dadurch gekennzeichnet,**
**dass** die Entnahmewelle (42) gleitend in einer Öffnung des zweiten Zahnrads (40) eingebaut wird.

6. Anordnung nach einem der vorherigen Ansprüche,
**dadurch gekennzeichnet,**
**dass** der genannte radial innere Raum (78) im Ganzen oder teilweise einem Schmierraum entspricht, in dem das mindestens eine Wälzlager (74a, 74b) Aufnahme findet.

7. Anordnung nach einem der vorherigen Ansprüche,
**dadurch gekennzeichnet,**
**dass** die genannten Einbaumittel (91) Mittel umfassen, die einen Deckel (93) bilden, der die zweite Öffnung (95) verschließt, sowie Verbindungsmittel (97) zwischen dem Deckel (93) und dem Körper (82) des Gehäuses zur Entnahme mechanischer Leistung (36) umfassen, wobei die Verbindungsmittel (97) vorzugsweise durch diese zweite Öffnung (95) hindurch verlaufen.

8. Anordnung nach einem der vorherigen Ansprüche,
**dadurch gekennzeichnet,**
**dass** die drehende Einheit eine Gebläse-Achsnabe (60) umfasst, die dazu bestimmt ist, direkt durch eine Niederdruckwelle (11) des Turbotriebwerks oder durch ein Getriebe (20), das seinerseits durch diese Niederdruckwelle oder durch eine Hochdruckwelle getrieben wird, getrieben zu werden.

9. Turbotriebwerk (1) für Flugzeuge, das eine Anordnung (100) nach einem der vorherigen Ansprüche aufweist.

10. Verfahren zur Montage einer Anordnung (100) nach einem der Ansprüche 1 bis 8,
**dadurch gekennzeichnet,**
**dass** es die folgenden aufeinander folgenden Verfahrensschritte umfasst:
- Einsetzen des Gehäuses zur Entnahme mechanischer Leistung (36) in den radial inneren Raum (78), und zwar von dem radial äußeren Raum (80) aus durch die genannte, in der Lagerstütze (70) ausgeführte zweite Öffnung (95); und
- Einsetzen der Welle zur Entnahme mechanischer Leistung (42) in das Gehäuse zur Entnahme mechanischer Leistung (36), und zwar von dem radial äußeren Raum (80) aus, indem sie durch die genannte, in der Lagerstütze (70) ausgeführte erste Öffnung (96) hindurch bewegt wird.

## Claims

1. Assembly (100) for an aircraft turbine engine (1), comprising:
- a rolling bearing bracket (70) delimiting, on either side thereof, a radially inner space (78) and a radially outer space (80);
- at least one rolling bearing (74a, 74b) housed in said radially inner space (78) and carried by said bearing bracket (70);
- a rotary assembly (58, 60, 38) intended to be rotated by a gas generator (2) of the turbine engine, said assembly rotating on a longitudinal axis (3) of the turbine engine and comprising a first gear (38) and being carried by said at least one rolling bearing (74a, 74b), said first gear being arranged in said radially inner space (78);
- a mechanical power takeoff box (36) housed in the radially inner space (78) and comprising a second gear (40) meshing with the first gear (38), the mechanical power takeoff box (36) comprising a body (82) rotationally housing said second gear (40) arranged in said radially inner space (78);
- a mechanical power takeoff shaft (42) inserted in the mechanical power takeoff box (36) and rotated by said second gear (40), the takeoff shaft (42) passing through a first opening (96) in the bearing bracket (70) and being intended to drive an accessory box (32) or one or more items of equipment of the turbine engine, said first opening (96) emerging on either side in said radially inner space (78) and in said radially outer space (80),
**characterised in that** it further comprises means (91) for mounting the mechanical power takeoff box (36) on the bearing bracket (70), said mounting means passing through a second opening (95) through the bearing bracket (70), said second opening (95), distinct from the first opening (96), emerging on either side in said radially inner space (78) and in said radially outer space (80), and being configured so as to allow the introduction of said takeoff box (36) in said radially inner space (78).

2. Assembly according to claim 1, **characterised in that** said bearing bracket (70) comprises two portions (70a, 70b) inclined with respect to each other, respectively a first portion (70a) with the second opening (95) passing through it, and a second portion (70b) with the first opening (96) passing through it.

3. Assembly according to claim 2, **characterised in that** the first and second portions (70a, 70b) form a V in a half-section, preferably defining an angle of inclination of approximately 90° between the two portions.

4. Assembly according to any of the preceding claims, **characterised in that** said bearing bracket (70) is produced from a plurality of parts mounted on one another.

5. Assembly according to any of the preceding claims, **characterised in that** the takeoff shaft (42) is mounted so as to slide in an orifice in the second gear (40).

6. Assembly according to any of the preceding claims, **characterised in that** said radially inner space (78) corresponds to all or part of a lubrication enclosure in which said at least one rolling bearing (74a, 74b) is housed.

7. Assembly according to any of the preceding claims, **characterised in that** said mounting means (91) comprise means forming a cover (93) closing off said second opening (95), and means (97) of connection between the cover (93) and the body (82) of the power takeoff box (36), the connection means (97) preferably passing through said second opening (95).

8. Assembly according to any of the preceding claims, **characterised in that** the rotary assembly comprises a fan hub (60) intended to be driven directly by a low-pressure shaft (11) of the turbine engine or by a reducing gear (20) itself driven by this low-pressure shaft or by a high-pressure shaft.

9. Aircraft turbine engine (1) comprising an assembly (100) according to any of the preceding claims.

10. Method for mounting an assembly (100) according to any of claims 1 to 8, **characterised in that** it comprises the following successive steps:
- introducing the power takeoff box (36) into the radially inner space (78), from the radially outer space (80), via said second opening (95) formed in the bearing (70); and
- introducing the power takeoff shaft (42) into the power takeoff box (36), from the radially outer space (80), causing it to pass through said first opening (96) formed in the bearing bracket (70).
